# EUROPEAN PATENT SPECIFICATION

(11) **EP 4 377 378 B1**
(45) Date of publication and mention of the grant of the patent: **16.07.2025**
(21) Application number: 22755210.6
(22) Date of filing: 27.07.2022
(51) Int. Cl.: C08G 65/40, B01D 69/00, B01D 71/00, C08G 75/23, C08J 5/00

(54) **POLYARYLETHER COPOLYMERS BASED ON DIOLS SUGAR ALCOHOLS**
POLYARYLETHERCOPOLYMERE AUF BASIS VON DIOLEN-ZUCKERALKOHOLEN
COPOLYMÈRES EN POLYARYLÉTHER À BASE D'ALCOOLS DE SUCRE DE DIOLS

(30) Priority: 30.07.2021 EP 21188922
(43) Date of publication of application: 05.06.2024
(73) Proprietor: BASF SE, 67056 Ludwigshafen am Rhein (DE)
(72) Inventor: WEBER, Martin, 67056 Ludwigshafen am Rhein (DE); MADER, Steffen, 67056 Ludwigshafen am Rhein (DE); MALETZKO, Christian, 67122 Altrip (DE); STEGMANN, Veit, 67056 Ludwigshafen am Rhein (DE)
(74) Representative: BASF IP Association
(86) International application number: PCT/EP2022/071106
(87) International publication number: WO 2023/006830

(56) References cited:
- EP-A1- 0 113 112
- EP-A1- 3 170 855
- WO-A1-2014/177640
- WO-A1-2016/032179
- WO-A1-2016/066661
- WO-A1-2020/053078
- WO-A1-2020/053079
- WO-A2-2014/177638
- TING Y-P ET AL: "PREPARATION OF POLYSULFONE/POLY(ETHYLENE OXIDE) BLOCK COPOLYMERS", MACROMOLECULES, AMERICAN CHEMICAL SOCIETY, US, vol. 29, no. 23, 4 November 1996 (1996-11-04), pages 7619 - 7621, XP000631113, ISSN: 0024-9297, DOI: 10.1021/MA9600421

## Description

The present invention relates to a process for the preparation of a polyarylether copolymer (P), the polyarylether copolymer (P) obtained by the process and a process for the preparation of a membrane comprising the polyarylether copolymer (P) and the membrane itself.

Polyarylether polymers comprise polyarylethersulfone polymers and polyaryletherketon polymers. Polyarylether polymers belong to the group of high-performance thermoplastics and are characterized by high heat distortion resistance, good mechanical properties and an inherent flame retardance (E.M. Koch, H.-M. Walter Kunststoffe 80 (1990) 1146; E. Döring, Kunststoffe 80 (1990) 1146; N. Inchaurohdo-Nehm, Kunsstoffe 98 (2008) 190).

The preparation of polyarylethers can be carried out either by the so-called hydroxide method or by the so-called carbonate method. In the preparation of polyarylether polymers by the hydroxide method, the corresponding diphenolate is prepared in a first step from the aromatic dihydroxyl compound. For this purpose, the aromatic dihydroxyl compound is deprotonated by a strong base such as sodium hydroxide. The deprotonation is carried out in an aprotic polar solvent such as dimethyl sulfoxide (DMSO). The deprotonation of the aromatic dihydroxyl compound releases water. For the hydroxide method it is necessary to remove the water formed as completely as possible from the diphenolate. The anhydrous diphenolate formed is subsequently reacted in a second step with the aromatic dihalogen compound. The polyarylether polymer is formed in the second step. For the deprotonation of the aromatic dihydroxyl compound in the first step of the preparation of polyarylether polymers by the hydroxide method, the stoichiometric ratio between the aromatic dihydroxyl compound and the sodium hydroxide used for the deprotonation must be maintained as exactly as possible. Even minor deviations in the stoichiometry can lead to a drastic reduction in the molecular weights of the polymers formed in the reaction.

The strong bases used in the hydroxide method can, in addition, further cleave the ether links formed in the polycondensation, which leads to a further decrease in the molecular weight of the polymers formed in the reaction. The preparation of polyarylether polymers by the hydroxide method is therefore prone to error and is very complex and expensive due to the measurement complexity for the exact maintenance of the stoichiometry and the two-stage synthesis.

For the carbonate method, the aromatic dihydroxyl compound and the aromatic dihalogen compound are reacted together in the presence of carbonates, preferably potassium carbonate. In general, N,N-dimethylacetamide, DMF, N-Ethylpyrrolidone or NMP is used here as solvent and toluene or chlorobenzene is added as azeotroping agent for the removal of water.

Before the actual polycondensation reaction in the carbonate method, an azeotrope of toluene and water is distilled off from the reaction mixture in order to form the diphenolate dianion from the aromatic dihydroxyl compound in the reaction mixture. The carbonate method has the advantage compared to the hydroxide method that the potassium carbonate excess can vary in a comparatively wide regime without decreasing the molecular weights of the polymers formed. The reaction control is thereby simplified in comparison with the hydroxide method.

An overview of the preparation of polyarylethersulfone polymers by the hydroxide method and by the carbonate method is given, for example, in J. E. McGrath et al., POLYMER 25, 1984, pp. 1827 to 1836. Moreover, the production of of polyarylethersulfone polymers are described in the patent applications US4870153, EP113112, EP297363 and EP135130, which are herby incorporated by reference. In these patent applications suitable educts, catalysts, solvents and ratios of the used components as well as reaction times and reaction temperatures can be found.

Polyarylether polymers are also used as materials for producing membranes and filter systems for the purification of water by micro- or ultrafiltration. To improve the compatibility of polyarylether polymers in membrane applications in the state of the art bio based diols like sugar alcohols have been incorporated in polyarylether polymers.

In several scientific publications the preparation and the properties of polyarylene ether sulfones and polyarylene ether ketones derived from biobased diols are disclosed (Kricheldorf et al. J Polm. Sci. Part A: Polymer Chemistry, Vol 33, 2667-2671(1995); Chatti et al. High Performance Polymers, 21: 105-118, 2009; Abderrazak et al. Macromol. Chem. Phys. 2013, 214, 1423-1433; Belgacem et al. Designed Monomers and Polymers, 2016, Vol 19, No. 3, 248-255). Polyarylene ether sulfones derived from 1,4:3,6-dianydrohexitols are also disclosed in WO 2014/072473 and WO2016/032179.

Sugar alcohols like isosorbide, isomannide and isoidide are produced by hydrogenation of glucose to give sorbitol. Isosorbide is obtained by acid-catalyzed dehydration of D-sorbitol which yields the monocyclic furanoid sorbitan, which in turn forms by further dehydration the bicyclic furofuran derivative isosorbide.

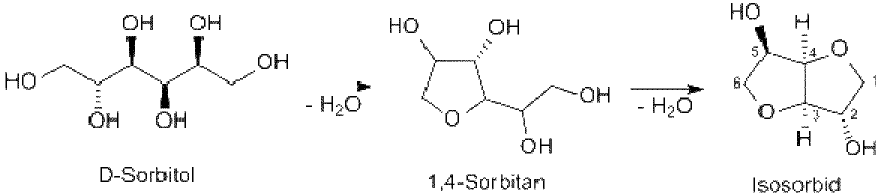

Isosorbide, isomannide and isoidide are technical monomers produced in industrial scale.

The use of polyarylether polymers containing isosorbide for membranes is already known from literature (EP 3 430 076, EP 3 850 032).

WO 2020/053078 A1 discloses a polyarylene ether copolymer comprising i) at least one block comprising in polymerized form A) isosorbide, isomannide, isoidide or a mixture thereof and B) at least one unit comprising at least one difunctional compound comprising at least one dichlorodiaryl sulfone, a dichlorodiaryl ketone or a mixture thereof and ii) at least one block comprising in polymerized form C) at least one polyalkylene oxide.

WO 2020/053079 A1 discloses a polyarylene ether comprising in polymerized form A) at least one tri- or higher functional compound and B) isosorbide, isomannide, isoidide or a mixture thereof, wherein the polyarylene ether is a polyarylene ether sulfone or a polyarylene ether ketone.

WO 2016/066661 A1 discloses a copolymer C comprising polyarylene ether blocks A and polyalkylene oxide blocks PAO, wherein said polyarylene ether blocks A are blocks of at least one partially sulfonated polyarylene ether.

In the article "Preparation of polysulfone/poly(ethylene oxide) block copolymers" (Ting Y-P et al., Macromolecules, American Chemical Society, US, 29, 23, 1996, 7619-7621.), the preparation of Polysulfone/Poly(ethylene oxide) Block Copolymers is described.

WO 2014/177640 A1 discloses a method for preparing a polyarylethersulfone-polyalkylene oxide block copolymer, the method comprising polycondensing a reaction mixture comprising: (A1) at least one aromatic dihalogen compound; (B1) at least one aromatic dihydroxyl compound; (B2) at least one polyalkylene oxide compound having at least one free hydroxyl group (-OH) and at least one capped hydroxyl group (-OR<A>); (C) at least one aprotic polar solvent; and (D) at least one metal carbonate, wherein the reaction mixture does not comprise any substance which forms an azeotrope with water.

WO 2014/177638 A2 discloses a block copolymer comprising polyarylene ether blocks and polyalkylene oxide blocks, wherein said block copolymer comprises at least two polyalkylene oxide blocks that are endcapped with different endcapping groups.

EP 3 170 855 A1 discloses a polysulfone copolymer comprising: repeat units derived from diol component comprising anhydrosugar alcohol; and repeat units derived from dihalogenated sulfone compound, wherein the anhydrosugar alcohol is selected from the group consisting of isosorbide, isomannide, isoidide and mixtures thereof.

WO 2016/032179 A1 discloses a polysulfone copolymer comprising a repeating unit derived from a diol component including anhydrosugar alcohol; and a repeating unit derived from a dihalogenated sulfone compound, wherein the anhydrosugar alcohol is selected from the group consisting of isosorbide, isomannide, isoidide and mixtures thereof.

EP 0 113 112 A1 discloses an amorphous thermoplastic polymer.

To improve the hydrophilicity of polyarylether polymers, particularly for membrane applications, usually the incorporation of aliphatic polyetherblocks, like polyethylene oxide, is used (Hancock, Macromolecules 1996, 29, 7619 and EP 2739668). EP 3 850 031 describes the preparation and use of polyarylether polymers containing isosorbide and polyalkyleneoxide. The copolymers have comparatively low molecular weight and can only be used as hydrophilic additive in membrane formulations.

The object of the present invention is therefore to provide a process for the preparation of a polyarylether copolymers (P), which does not have, or have only to a reduced degree, the disadvantages of the methods described in the prior art. The method should be simple to carry out, as far as possible not prone to error, and inexpensive. The polyarylether polymers (P) obtained by the process should have high molecular weight, improved color and form homogeneous solutions for membrane preparation.. Membranes produced from the polyarylether polymers (P), moreover, should show good water permeability and a good molecular weight cut-off and low fouling tendency.

The object is achieved according to the invention by a process for the preparation of a polyarylether copolymer (P) comprising the step of
converting a reaction mixture (R_{G}) comprising as components
(A1) at least one aromatic dihalogen component
(B1) at least one sugar alcohol selected from the group consisting of isosorbide, isomannide and isoidide,
(B2) at least one aromatic dihydroxy component,
(B3) at least one dihydroxy polyalkylene oxide,
   wherein the reaction mixture (R_{G}) comprises 10 to 70 mol% of component (B1) and 29.5 to 65 mol% of component (B2) and from 0.5 to 5 mol% of component (B3), based on the total amount of components (B1), (B2) and (B3) contained in the reaction mixture (R_{G}).

It has surprisingly been found, that polyarylether copolymers obtained by the inventive process can be prepared in condensation times below 12h and show several advantageous properties. Membranes produced from the polyarylether polymers (P), moreover, show good water permeability, a good molecular weight cut-off and reduced tendency for fouling.

### Reaction mixture (R_{G})

For the preparation of the polyarylether polymer (P) according to the invention, a reaction mixture (R_{G}) comprising the components (A1), (B1), (B2) and (B3) as described below is reacted. In a preferred embodiment the reaction mixture, moreover, comprises as component (C) at least one aprotic polar solvent and as component (D) at least one carbonate component..

Therefore, another object of the present invention is a process, wherein the reaction mixture (R_{G}) moreover comprise the components
(C) at least one aprotic polar solvent and
(D) at least one carbonate component.

The components (A1), (B1), (B2), and (B3) enter into a polycondensation reaction.

Component (D), if present, acts as base to deprotonate the components (B1), (B2) and (B3) during the condensation reaction. Component (C), if present, acts as solvent.

Reaction mixture (R_{G}) is understood to mean the mixture that is used in the process according to the invention for preparation of the polyarylether copolymer (P). In the present case, all details given with respect to the reaction mixture (R_{G}) thus relate to the mixture that is present prior to the polycondensation. The polycondensation takes place during the process according to the invention, in which the reaction mixture (R_{G}) reacts by polycondensation of components (A1), (B1), (B2) and (B3) to give the target product, the polyarylether copolymer (P). The mixture obtained after the polycondensation, which comprises the polyarylether copolymer (P) target product, is also referred to as product mixture (P_{G}).

The components of the reaction mixture (R_{G}) are generally reacted concurrently. The individual components may be mixed in an upstream step and subsequently be reacted. It is also possible to feed the individual components into a reactor in which these are mixed and are then reacted.

In the method according to the invention, the individual components of the reaction mixture (R_{G}) are generally reacted concurrently. The reaction is preferably conducted in one stage. This means that the deprotonation of components (B1), (B2) and (B3) and also the condensation reaction between the components (A1), (B1), (B2) and (B3) preferably takes place in a single reaction stage without isolation of the intermediate products, for example the deprotonated species of components (B1), (B2) and (B3).

The method according to the invention is preferably carried out according to the so-called carbonate method. The method according to the invention is preferably not carried out according to the so-called hydroxide method. This means that the method according to the invention is preferably not carried out in two stages with isolation of phenolate anions.

### Component (A1)

The reaction mixture (R_{G}) comprises at least one aromatic dihalogen component as component (A1). The term "at least one aromatic dihalogen compound", in the present case, is understood to mean exactly one aromatic dihalogen compound and also mixtures of two or more aromatic dihalogen compounds. The reaction mixture (R_{G}) preferably comprises at least one compound selected from the group consisting of aromatic dihalosulfone compounds and aromatic dihaloketone compounds as component (A1). The aromatic dihalogen compounds (component (A1)) are particularly preferred dihalodiphenyl sulfones and/or dihalodiphenylketones.

The present invention therefore also relates to a method in which the reaction mixture (R_{G}) comprises at least one dihalodiphenylsulfone and/or dihalodiphenylketone as component (A1). In a preferred embodiment the reaction mixture (R_{G}) comprises at least one dihalodiphenylsulfone.

For component (A1) among the aromatic dihalosulfone compounds and the aromatic dihaloketone compounds the aromatic dihalosulfone compounds are especially preferred.

The component (A1) is preferably used as a monomer. This means that the reaction mixture (R_{G}) comprises component (A1) as a monomer and not as a prepolymer.

The reaction mixture (R_{G}) comprises preferably at least 50% by weight of an aromatic dihalosulfone compound and/or an aromatic dihaloketone compound, preferably a dihalodiphenyl sulfone compound and/or dihalodiphenyl ketone compound, as component (A1), based on the total weight of component (A1) in the reaction mixture (R_{G}).

Preferred dihalodiphenyl sulfones are the 4,4'-dihalodiphenyl sulfones. Particular preference is given to 4,4'-dichlorodiphenyl sulfone, 4,4'-difluorodiphenyl sulfone and 4,4'-dibromodiphenyl sulfone as component (A1). 4,4'-Dichlorodiphenyl sulfone and/or 4,4'-difluorodiphenyl sulfone are particularly preferred, while 4,4'-dichlorodiphenyl sulfone is most preferred.

Therefore, another object of the present invention is a process, wherein component (A1) is selected from the group consisting of 4,4'-dichlorodiphenylsulfone and 4,4'-difluorodiphenylsulfone.

Preferred dihalodiphenyl ketones are the 4,4'-dihalodiphenyl ketones (4,4'-dihalobenzophenone). Particular preference is given to 4,4'-dichlorodiphenyl ketone (4,4'-dichlorobenzophenone), 4,4'-difluorodiphenyl ketone (4,4'-difluorobenzophenone) and/or 4,4'-dibromodiphenyl ketone (4,4'-dibromobenzophenone) as component (A1). 4,4'-Dichlorodiphenyl ketone and 4,4'-difluorodiphenyl ketone are particularly preferred, while 4,4'-dichlorodiphenyl ketone is most preferred.

Therefore, another object of the present invention is a process, wherein component (A1) is selected from the group consisting of 4,4'-dichlorodiphenylketone and 4,4'-difluorodiphenylketone.

The present invention therefore also relates to a method wherein component (A1) comprises at least 50% by weight of at least one aromatic dihalosulfone compound selected from the group consisting of 4,4'-dichlorodiphenyl sulfone and 4,4'-difluorodiphenyl sulfone, based on the total weight of component (A1) in the reaction mixture (R_{G}).

Therefore, another object of the present invention is a process, wherein component (A1) comprises at least 50% by weight of 4,4'-dichlorodiphenylsulfone and/or 4,4'-difluorodiphenylsulfone based on the total weight of component (A1) contained in the reaction mixture (R_{G}).

In a particularly preferred embodiment, component (A1) comprises at least 80% by weight, preferably at least 90% by weight, more preferably at least 98% by weight, of an aromatic dihalosulfone compound selected from the group consisting of 4,4'-dichlorodiphenyl sulfone and 4,4'-difluorodiphenyl sulfone, based on the total weight of component (A1) in the reaction mixture (R_{G}).

In a further particularly preferred embodiment, component (A1) consists essentially of at least one aromatic dihalosulfone compound selected from the group consisting of 4,4'-dichlorodiphenyl sulfone and 4,4'-difluorodiphenyl sulfone. "Consisting essentially of", in the present case, is understood to mean that component (A1) comprises more than 99% by weight, preferably more than 99.5% by weight, particularly preferably more than 99.9% by weight, of at least one aromatic dihalosulfone compound selected from the group consisting of 4,4'-dichlorodiphenyl sulfone and 4,4'-difluorodiphenyl sulfone, based in each case on the total weight of component (A1) in the reaction mixture (R_{G}). In these embodiments, 4,4'-dichlorodiphenyl sulfone is particularly preferred as component (A1).

In a further particularly preferred embodiment, component (A1) consists of 4,4'-dichlorodiphenyl sulfone.

### Component (B1)

The reaction mixture (R_{G}) comprises at least one sugar alcohol selected form the group consisting of isosorbide, isomannide and isoidide as component (B1). The term "at least one sugar alcohol selected form the group consisting of isosorbide, isomannide and isoidide", in the present case, is understood to mean exactly one sugar alcohol and also mixtures of two or more sugar alcohol selected from the group consisting of isosorbide, isomannide and isoidide.

Component (B1) comprised in reaction mixture (R_{G}) is at least one sugar alcohol selected form the group consisting of isosorbide, isomannide, isoidide.

Component (B1) is known to those skilled in the art. Isosorbide, isomannide and isoidide belong to the family of 1,4:3,6-dianhydrohexitols and are of formula I:

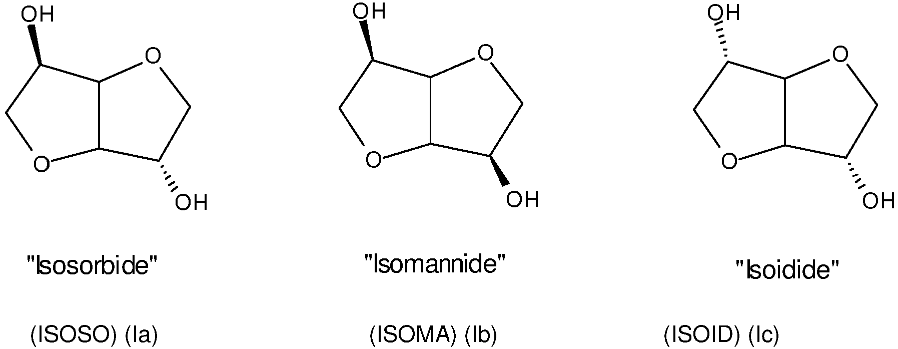

As already discussed above isosorbide, isomannide and isoidide used in the state of the art are technical monomers having a purity higher than 98% by wt.%, preferably higher than 98.5% by weight.

In the process according to the invention isosorbide, isomannide and/or isoidide are used having in each case a purity of at least 99% by weight.

The reaction mixture (R_{G}) preferably comprises 35 to 68.5 mol% of component (B1), 31 to 61 mol% (B2) and 0.5 to 4 mol% of component (B3) based on the total amount of components (B1), (B2) and (B3) contained in the reaction mixture (R_{G}).

In a more preferred embodiment the reaction mixture (R_{G}) comprises 37 to 67.5 mol% of component (B1), 32 to 60 mol% of component (B2) and 0.5 to 3 mol% of component (B3) based on the total amount of components (B1), (B2) and (B3) contained in the reaction mixture (R_{G}).

In an even more preferred embodiment the reaction mixture (R_{G}) comprises 40 to 65 mol% of component (B1), 34.5 to 58 mol% of component (B2) and 0.5 to 2 mol% based on the total amount of components (B1), (B2) and (B3) contained in the reaction mixture (R_{G}).

As component (B1) isosorbide is especially preferred. In other words, in the especially preferred embodiment, wherein the component (B1) consists of isosorbide, said isosorbide preferably has the above mentioned purity and may still contain the above mentioned impurities.

### Component (B2)

The reaction mixture (R_{G}) comprises at least one aromatic dihydroxyl compound as component (B2). The term "at least one aromatic dihydroxyl compound", in the present case, is understood to mean exactly one aromatic dihydroxyl compound and also mixtures of two or more aromatic dihydroxyl compounds. The aromatic dihydroxyl compounds used are typically compounds having two phenolic hydroxyl groups. Since the reaction mixture (R_{G}) in a preferred embodiment comprises a metal carbonate, the hydroxyl groups of component (B2) in the reaction mixture may be present at least partially in deprotonated form.

Component (B2) is preferably used as a monomer. This means that the reaction mixture (R_{G}) preferably comprises component (B2) as a monomer and not as a prepolymer.

Suitable aromatic dihydroxyl compounds (component (B2)) are, for example, selected from the group consisting of 4,4'-dihydroxybiphenyl, 4,4'-dihydroxydiphenylsulfone and bisphenol A (IUPAC name: 4,4'-(propane-2,2-diyl)diphenol)).

In one embodiment of the present invention, the reaction mixture (R_{G}) does not comprise any bisphenol A. In another embodiment the reaction mixture (R_{G}) does not comprise 4,4'-dihydroxydiphenylsulfone. In yet another embodiment the reaction mixture (R_{G}) does not comprise tri- or higher functional compounds like 1,1,1-trihydroxyphenylethan.

Component (B2) preferably comprises at least 50% by weight, more preferably at least 80% by weight, particularly preferably at least 90% by weight and especially at least 98% by weight of an aromatic dihydroxyl compound selected from the group consisting of 4,4'-dihydroxybiphenyl, 4,4'-dihydroxydiphenylsulfone and bisphenol A, based on the total weight of component (B2) in the reaction mixture (R_{G}). 4,4'-Dihydroxybiphenyl and 4,4'-dihydroxydiphenylsulfone are preferred as aromatic dihydroxyl compounds, wherein 4,4'-dihydroxybiphenyl is particularly preferred as aromatic dihydroxyl compound.

Therefore, another object of the present invention is a process, wherein the dihydroxy component (B2) comprises at least 50 % by weight of 4,4'-dihydroxybiphenyl, based on the total weight of component (B2) contained in the reaction mixture (R_{G}).

The present invention therefore also relates to a method in which component (B2) comprises at least 50% by weight of an aromatic dihydroxyl compound selected from the group consisting of 4,4'-dihydroxybiphenyl, 4,4'-dihydroxydiphenylsulfone and bisphenol A, based on the total weight of component (B2) in the reaction mixture (R_{G}). In a preferred embodiment component (B2) comprises at least 50% by weight, preferably at least 80% by weight, particularly preferably at least 90% by weight and especially at least 98% by weight of 4,4'-dihydroxybiphenyl, based on the total weight of component (B2) in the reaction mixture (R_{G}).

In a particularly preferred embodiment, component (B2) consists essentially of 4,4'-dihydroxybiphenyl. "Consisting essentially of", in the present case, is understood to mean that component (B2) comprises more than 99% by weight, preferably more than 99.5% by weight, particularly preferably more than 99.9% by weight, of 4,4'-dihydroxybiphenyl, based in each case on the total weight of component (B2) in the reaction mixture (R_{G}).

In a particularly preferred embodiment, component (B2) consists of 4,4'-dihydroxybiphenyl.

The reaction mixture (R_{G}) comprises 0.5 to 5 mol% of component (B3) based on the total amount of components (B1), (B2) and (B3) contained in the reaction mixture (R_{G}).

Component (B3) generally can be a diol. Component (B3) generally can substantially consist of oxyalkylene units. Oxyalkylene units may also be termed alkylene oxide units in the following. Oxyalkylene units are, in a way which is known in principle, units of the general formula -R₁-O-. In this formula R₁ is a divalent aliphatic hydrocarbon radical which may also, optionally, have at least one further substituent. Said at least one substituent on the radical R₁ may comprise, in particular, one or more O-containing groups, such as one or more OH groups. Component (B3) may of course also comprise two or more different oxyalkylene units.

The oxyalkylene units may in particular be -(CH₂)₂-O-, -(CH₂)₃-O-, -(CH₂)₄-O-, -CH₂-CH(R₂)- O-, -CH₂-CHOR₃-CH2-O-, with R₂ being an alkyl group, especially C1 to C24 alkyl, or an aryl group, especially phenyl, and with R₃ being a group selected from the group consisting of hydrogen or C1 to C24 alkyl.

Component (B3) may also comprise further structural units, such as ester groups carbonate groups or amino groups, for example. They may additionally comprise the starter molecule or starter molecules used at the start of the polymerization of the polyalkylene oxide, or fragments thereof. Examples comprise terminal groups R₂-O-, where R₂ is as defined above.

It may be preferred that component (B3) comprises ethylene oxide units -(CH₂)₂-O- and/or propylene oxide units -CH₂-CH(CH₃)-O-, as main components, while higher alkylene oxide units, i.e. those having more than 3 carbon atoms, are present only in small amounts in order to finetune the properties. Component (B3) may be a random copolymer, gradient copolymer, alternating or block copolymer comprising ethylene oxide and propylene oxide units. The amount of higher alkylene oxide units generally does not exceed 10% by weight, preferably 5% by weight, based on the molecular weight (Mn) of component (B3). Component (B3) may preferably comprising at least 50% by weight of ethylene oxide units, based on the molecular weight (Mn) of component (B3), preferably 75% by weight, and more preferably at least 90% by weight of ethylene oxide units, based on the molecular weight (Mn) of component (B3). It may be very particular preferred that component (B3) is a pure polyoxyethylene.

Component (B3) can be obtained in a manner known in principle or using methods which are principally known, for example, by polymerizing at least one alkylene oxide and/or cyclic ether having at least 3 carbon atoms and also, optionally, at least one further component. They may additionally be prepared by polycondensing at least one dialcohol and/or polyalcohol, suitable starter, and also, optionally, at least one further monomeric component. Examples of the at least one suitable alkylene oxide comprise ethylene oxide and propylene oxide, 1-butene oxide, 2,3-butene oxide, 2-methyl- 1,2-propene oxide (isobutene oxide), 1- pentene oxide, 2,3-pentene oxide, 2-methyl-1,2-butene-oxide, 3-methyl-1,2-butene oxide, 2,3-hexene oxide, 3,4-hexene oxide, 2-methyl-1,2-pentene oxide, 2-ethyl-1,2-butene oxide, 3-methyl-1,2-pentene oxide, decene oxide, 4-methyl-1,2-pentene oxide, styrene oxide, or be formed from a mixture of oxides of industrially available raffinate streams. Examples of the at least one cyclic ether comprise tetrahydrofuran. The skilled worker makes an appropriate selection from among the monomers and further components in accordance with the desired properties of component (B3) and therefore block ii) and the polyarylene ether copolymer respectively. Thereby one of the desired properties of component (B3) is typically its hydrophilicity.

Component (B3) may also be branched or star-shaped. Component (B3) of this kind may be obtainable by using at least one starter molecule having at least 3 arms.

Examples of suitable starter comprise glycerol, trimethylolpropane, pentaerythritol or ethylenediamine.

Component (B3) may be an polyalkylene oxide with a low number average of alkylene oxid units. The number average of alkylene oxid units can also be high, depending on the desired properties. It may be preferred that the polyalkylene oxide has a number average weight from 200 to 20 000 g/mol.

### Component (C)

The reaction mixture (R_{G}) comprises in a preferred embodiment at least one aprotic polar solvent as component (C). "At least one aprotic polar solvent", according to the invention, is understood to mean exactly one aprotic polar solvent and also mixtures of two or more aprotic polar solvents.

Suitable aprotic polar solvents are, for example, anisole, dimethylformamide, dimethyl sulfoxide, sulfolane, N,N-dimethylacetamide, N-methyl-2-pyrrolidone, N-ethyl-2-pyrrolidone and also mixtures of these solvents.

Therefore, another object of the present invention is a process, wherein component (C) is at least one solvent selected from the group consisting of anisole, dimethylformamide, dimethyl sulfoxide, sulfolane, N,N-dimethylacetamide, N-methyl-2-pyrrolidone and N-ethyl-2-pyrrolidone.

Preferred aprotic polar solvents are N-methyl-2-pyrrolidone, N-ethyl-2-pyrrolidone and also mixtures of these solvents. N-Methyl-2-pyrrolidone is particularly preferred as aprotic polar solvent.

The present invention therefore also relates to a method in which the reaction mixture (R_{G}) comprises N-methyl-2-pyrrolidone as component (C).

In a preferred embodiment, component (C) comprises at least 50% by weight preferably at least 80% by weight, particularly preferably at least 90% by weight and especially at least 98% by weight of at least one solvent selected from the group consisting of N-methyl-2-pyrrolidone and N-ethyl-2-pyrrolidone, based on the total weight of component (C) in the reaction mixture (R_{G}). N-Methyl-2-pyrrolidone is particularly preferred as component (C).

In a further embodiment, component (C) consists essentially of N-methyl-2-pyrrolidone. "Consisting essentially of", in the present case, is understood to mean that component (C) comprises more than 99% by weight, particularly preferably more than 99.5% by weight, particularly preferably more than 99.9% by weight, of at least one aprotic polar solvent selected from the group consisting of N-methyl-2-pyrrolidone and N-ethyl-2-pyrrolidone, with preference given to N-methyl-2-pyrrolidone.

The aprotic polar solvent (component (C)) is a technical solvent produced in industrial scale, the aprotic polar solvent, by consequence, generally contains impurities.

In a preferred embodiment, component (C) consists of N-methyl-2-pyrrolidone. N-Methyl-2-pyrrolidone is also referred to as NMP or N-methylpyrrolidone.

The reaction mixture (R_{G}), according to the invention, in a preferred embodiment does not comprise any substance which forms an azeotrope with water. Water of reaction is formed in the method according to the invention in the condensation reaction between the components (A1), (B1), (B2) and (B3). In the methods described in the prior art, it is often necessary to add an azeotropic agent in order to remove the water of reaction formed in the condensation reaction as an azeotrope.

"Azeotrope", according to the invention, is understood to mean a mixture of water and one or more further substances which cannot be separated by distillation. "Azeotrope" is therefore understood to mean, according to the invention, a mixture of water and one or more substances which, on phase transition from liquid to gaseous, behaves as if it were a pure substance. In a preferred embodiment, the reaction mixture (R_{G}) does not comprise any toluene or chlorobenzene.

### Component (D)

The reaction mixture (R_{G}) comprises in a preferred embodiment at least one metal carbonate as component (D). "At least one metal carbonate", according to the invention, is understood to mean exactly one metal carbonate and also mixtures of two or more metal carbonate. The metal carbonate is preferably anhydrous. Preference is given to alkali metal carbonates and/or alkaline earth metal carbonates as metal carbonates. At least one metal carbonate selected from the group consisting of sodium carbonate, potassium carbonate and calcium carbonate is particularly preferred as metal carbonate. Potassium carbonate is most preferred.

In a preferred embodiment, component (D) consists essentially of potassium carbonate. "Consisting essentially of", in the present case, is understood to mean that the component (D) comprises more than 99% by weight, preferably more than 99.5% by weight, particularly preferably more than 99.9% by weight, of potassium carbonate, based in each case on the total weight of component (D) in the reaction mixture (R_{G}).

In a particularly preferred embodiment, component (D) consists of potassium carbonate.

Potassium carbonate having a volume weighted average particle size of less than 200 µm is particularly preferred as potassium carbonate. The volume weighted average particle size of the potassium carbonate is determined in a suspension of potassium carbonate in N-methyl-2-pyrrolidone using a particle size analyser.

Particular preference is given to a reaction mixture (R_{G}) in which

| | |
|---|---|
| component (A1) | comprises at least 50% by weight, preferably at least 90% by weight, particularly preferably at least 98% by weight, of 4,4'-dichlorodiphenylsulfone, based on the total weight of component (A1) in the reaction mixture (R_{G}), |
| component (B1) | is at least one sugar alcohol selected from the group consisting of isosorbide, isomannide and isoidide, wherein the isosorbide, the isomannide and the isoidide when used in each case have a purity of at least 99% by weight, |
| component (B2) | comprises at least 50% by weight, preferably at least 90% by weight, particularly preferably at least 98% by weight, of 4,4'-dihydroxbiphenyl, based on the total weight of component (B2) in the reaction mixture (R_{G}), |
| component (B3) | comprises at least 50% by weight, preferably at least 90% by weight, particularly preferably at least 98% by weight, of a polyethylene oxide, based on the total weight of component (B3) in the reaction mixture (R_{G}), |
| component (C) | consists essentially of N-methylpyrrolidone and |
| component (D) | consists essentially of potassium carbonate. |

In a preferred embodiment the reaction mixture (R_{G}) does not comprise any substance which forms an azeotrope with water.

In a preferred embodiment the sum of the total weight of component (A1), (B1), (B2), (B3), (C) and (D) contained in the reaction mixture (R_{G}) is at least 80% by weight, more preferred at least 90% by weight, even more preferred at least 95% by weight an particularly preferred at least 98% by weight, in each case based on the total weight of the reaction mixture (R_{G}).

The present invention in a further particularly preferred embodiment therefore also relates to a method in which component (A1) is 4,4'-dichlorodiphenylsulfone, component (B1) is at least one sugar alcohol selected from the group consisting of isosorbide, isomannide and isoidide, wherein the isosorbide, the isomannide and the isoidide when used in each case have a purity of at least 99% by weight and component (B2) is 4,4'-dihydroxybiphenyl and (B3) is a polyethylene oxide of a number average molecular weight of 500 to 9000 g/mol.

The ratios of components (A1), (B1), (B2) and (B3) in the reaction mixture (R_{G}) may vary within wide ranges. The reaction mixture (R_{G}) generally comprises 0.3 to 0.7 mol of component (B1), 0.295 to 0.65 mol of component (B2) and 0.005 to 0.05 mol of component (B3) per 1 mol of component (A1).

### Polyarylether copolymer (P)

To prepare the polyarylether copolymer (P) according to the invention, the reaction mixture (R_{G}) is preferably reacted under the conditions of the so-called carbonate method. The reaction (polycondensation reaction) is generally conducted at temperatures in the range of 80 to 250°C, preferably in the range of 100 to 220°C, where the upper limit of the temperature is determined by the boiling point of the solvent at standard pressure (1013.25 mbar). The reaction is generally carried out at standard pressure. The reaction is preferably carried out over a time interval of 0.5 to 12 hours, particularly in the range of 1 to 10 hours.

The isolation of the polyarylether copolymer (P) obtained according to the invention may be carried out, for example, by precipitation of the polymer solution in water or mixtures of water with other solvents. The precipitated polyarylether copolymer (P) can subsequently be extracted with water and then dried. In one embodiment of the invention, the precipitate can also be taken up in an acidic medium. Suitable acids are, for example, organic or inorganic acids, for example carboxylic acids such as acetic acid, propionic acid, succinic acid or citric acid, and mineral acids such as hydrochloric acid, sulfuric acid or phosphoric acid.

Polyarylether copolymer (P) having low polydispersities (Q) and high glass transition temperatures (T_{g}) are obtained by the method according to the invention. The polyarylether copolymer (P), moreover, have very low amounts of impurities, for example azeotroping agents such as toluene or chlorobenzene.

The present invention therefore also provides a polyarylether copolymer (P) which is obtainable by the process according to the invention. The polyarylether copolymer (P) generally has a polydispersity (Q) of ≤ 4, preferably ≤ 3.5.

The polydispersity (Q) is defined as the quotient of the weight average molecular weight (M_{w}) and the number average molecular weight (Mₙ). In a preferred embodiment, the polydispersity (Q) of the copolyarylether polymer (P) is in the range of 2.0 to ≤ 4, preferably in the range of 2.0 to ≤ 3.5.

The weight average molecular weight (M_{w}) and the number average molecular weight (Mₙ) are measured by means of gel permeation chromatography.

The polydispersity (Q) and the average molecular weights of the polyarylether copolymer (P) were measured by means of gel permeation chromatography (GPC) in dimethylacetamide (DMAc). The mobile phase (eluent) used was DMAc comprising 0.5% by weight of lithium bromide. The concentration of the polyarylether copolymer (P) (P solution) was 4 mg per ml of solution. After filtration (pore size 0.2 µm), 100 µl of this solution were injected into the GPC system. Four different columns (heated to 80°C) were used for separation (GRAM precolumn, GRAM 30A, GRAM 1000A, GRAM 1000A; separation material: polyester copolymers ex. PSS). The GPC system was operated at a flow rate of 1 ml per minute. A DRI-Agilent 1100 was used as the detection system. PMMA standards ex. PSS having a molecular weight Mₙ in the range of 800 to 1 820 000 g/mol were used for the calibration.

The polyarylether copolymer (P) obtainable by the method according to the invention generally has weight average molecular weights (M_{w}) of 10 000 to 150 000 g/mol, preferably in the range of 15 000 to 120 000 g/mol, particularly preferably in the range of 20 000 to 90 000 g/mol. The weight average molecular weights (M_{w}) are measured by means of gel permeation chromatography (GPC). The measurement is carried out as described above.

The polyarylether polymer (P) obtainable by the method according to the invention generally has a glass transition temperature in of 100 to 220°C, preferably in the range of 130 to 215°C, particularly preferably in the range of 140 to 210°C. The measurement of the glass transition temperature (T_{g}) was carried out in a DSC 2000 (TA Instruments) at a heating rate of 20 K/min. For the measurement, approximately 5 mg of the substance were sealed in an aluminum crucible. In the first heating run, the samples are heated to 250°C, then rapidly cooled to -100°C and then, in the second heating run, heated to 250°C at 20 K/min. The respective T_{g} value is determined from the second heating run.

Therefore, another object of the present invention is a polyarylether copolymer (P) obtained by a process according to the invention.

### Membrane preparation

A membrane (M) can be prepared from the polyarylether copolymer (P) according to the present invention by any method known to the skilled person.

Therefore, another object of the present invention is the use of a polyarylether copolymer (P) in a membrane (M).

Therefore, another object of the present invention is a membrane (M), wherein the membrane (M) is a dense membrane or a porous membrane.

Preferably, a membrane (M) comprising the polyarylether copolymer (P) obtainable by the inventive process is prepared by a method comprising the steps
i) providing a solution (S) which comprises the polyarylether copolymer (P) and at least one solvent,
ii) separating the at least one solvent from the solution (S) to obtain the membrane (M).

Another object of the present invention is therefore a method for the preparation of an inventive membrane (M), wherein the method comprises the steps
i) providing a solution (S) which comprises the polyarylether copolymer (P) and at least one solvent,
ii) separating the at least one solvent from the solution (S) to obtain the membrane (M).

### Step i)

In step i) a solution (S) is provided which comprises the polyarylether copolymer (P) and at least one solvent.

"At least one solvent" within the context of the present invention means precisely one solvent also a mixture of two or more solvents.

The solution (S) can be provided in step i) by any method known to the skilled person. For example, the solution (S) can be provided in step i) in customary vessels which may comprise a stirring device and preferably a temperature control device. Preferably, the solution (S) is provided by dissolving the polyarylether copolymer (P) in the at least one solvent.

The dissolution of the polyarylether copolymer (P) in the at least one solvent to provide the solution (S) is preferably effected under agitation.

Step i) is preferably carried out at elevated temperatures, especially in the range from 20 to 120°C, more preferably in the range from 40 to 100°C. A person skilled in the art will choose the temperature in accordance with the at least one solvent.

The solution (S) preferably comprises the polyarylether copolymer (P) completely dissolved in the at least one solvent. This means that the solution (S) preferably comprises no solid particles of the polyarylether copolymer (P). Therefore, the polyarylether copolymer (P) preferably cannot be separated from the at least one solvent by filtration.

The solution (S) preferably comprises from 0.001 to 50% by weight of the polyarylether copolymer (P) based on the total weight of the solution (S). More preferably, the solution (S) in step i) comprises from 0.1 to 30% by weight of the polyarylether copolymer (P) and most preferably the solution (S) comprises from 0.5 to 25% by weight of the polyarylether copolymer (P) based on the total weight of the solution (S).

Another object of the present invention is therefore also a method for the preparation of a membrane (M) wherein the solution (S) in step i) comprises from 0.1 to 30% by weight of the polyarylether copolymer (P), based on the total weight of the solution (S).

As the at least one solvent, any solvent known to the skilled person for the polyarylether copolymer (P) is suitable. Preferably, the at least one solvent is soluble in water. Therefore, the at least one solvent is preferably selected from the group consisting of N-methylpyrrolidone, dimethylacetamide, dimethylsulfoxide, dimethyllactamide, dimethylformamide and sulfolane. N-methylpyrrolidone and dimethyllactamide are particularly preferred. Dimethyllactamide is most preferred as the at least one solvent.

Another object of the present invention is therefore also a method for the preparation of a membrane (M) wherein the at least one solvent is selected from the group consisting of N-methylpyrrolidone, dimethylacetamide, dimethyl sulfoxide, dimethylformamide, dimethyllactamide and sulfolane.

The solution (S) preferably comprises in the range from 50 to 99.999% by weight of the at least one solvent, more preferably in the range from 70 to 99.9% by weight and most preferably in the range from 75 to 99.5% by weight of the at least one solvent based on the total weight of the solution (S).

The solution (S) provided in step i) can furthermore comprise additives for the membrane preparation.

Suitable additives for the membrane preparation are known to the skilled person and are, for example, polyvinylpyrrolidone (PVP), polyethylene oxide (PEO), polyethylene oxide-polypropylene oxide copolymer (PEO-PPO) and poly(tetrahydrofurane) (poly-THF). Polyvinylpyrrolidone (PVP) and polyethylene oxide (PEO) are particularly preferred as additives for the membrane preparation.

The additives for membrane preparation can, for example, be comprised in the solution (S) in an amount of from 0.01 to 20% by weight, preferably in the range from 0.1 to 15% by weight and more preferably in the range from 1 to 10% by weight based on the total weight of the solution (S).

To the person skilled in the art it is obvious that the percentages by weight of the polyarylether copolymer (P) the at least one solvent and the optionally comprised additive for membrane preparation comprised in the solution (S) typically add up to 100% by weight.

The duration of step i) may vary between wide limits. The duration of step i) is preferably in the range from 10 min to 48 h (hours), especially in the range from 10 min to 24 h and more preferably in the range from 15 min to 12 h. A person skilled in the art will choose the duration of step i) so as to obtain a homogeneous solution of the polyarylether copolymer (P) in the at least one solvent.

For the polyarylether copolymer (P) comprised in the solution (S) the embodiments and preferences given for the polyarylether copolymer (P)) obtained in the inventive process hold true.

### Step ii)

In step ii) the at least one solvent is separated from the solution (S) to obtain the membrane (M). It is possible to filter the solution (S) provided in step i) before the at least one solvent is separated from the solution (S) in step ii) to obtain a filtered solution (fS). The following embodiments and preferences for separating the at least one solvent from the solution (S) applies equally for separating the at least one solvent from the filtered solution (fS) which is used in this embodiment of the invention.

Furthermore, degassing steps might be applied to the solution (S) or the filtered solution (fS).

The separation of the at least one solvent from the solution (S) can be performed by any method known to the skilled person which is suitable to separate solvents from polymers.

Preferably, the separation of the at least one solvent from the solution (S) is carried out via a phase inversion process.

Another object of the present invention is therefore also a method for the preparation of a membrane (M), wherein the separation of the at least one solvent in step ii) is carried out via a phase inversion process.

If the separation of the at least one solvent is carried out via a phase inversion process, the obtained membrane (M) is typically a porous membrane.

A phase inversion process within the context of the present invention means a process wherein the dissolved polyarylether copolymer (P) is transformed into a solid phase. Therefore, a phase inversion process can also be denoted as precipitation process. According to step ii) the transformation is performed by separation of the at least one solvent from the polyarylether copolymer (P). The person skilled in the art knows suitable phase inversion processes.

The phase inversion process can, for example, be performed by cooling down the solution (S). During this cooling down, the polyarylether copolymer (P) comprised in this solution (S) precipitates. Another possibility to perform the phase inversion process is to bring the solution (S) in contact with a gaseous liquid that is a non-solvent for the polyarylether copolymer (P). The polyarylether copolymer (P) will then as well precipitate. Suitable gaseous liquids that are non-solvents for the polyarylether polymer (P) are for example protic polar solvents described hereinafter in their gaseous state.

Another phase inversion process which is preferred within the context of the present invention is the phase inversion by immersing the solution (S) into at least one protic polar solvent.

Therefore, in one embodiment of the present invention, in step ii) the at least one solvent comprised in the solution (S) is separated from the polyarylether copolymer (P) comprised in the solution (S) by immersing the solution (S) into at least one protic polar solvent.

This means that the membrane (M) is formed by immersing the solution (S) into at least one protic polar solvent.

Suitable at least one protic polar solvents are known to the skilled person. The at least one protic polar solvent is preferably a non-solvent for the polyarylether copolymer (P).

Preferred at least one protic polar solvents are water, methanol, ethanol, n-propanol, iso-propanol, glycerol, ethylene glycol and mixtures thereof.

Step ii) usually comprises a provision of the solution (S) in a form that corresponds to the form of the membrane (M) which is obtained in step ii).

Therefore, in one embodiment of the present invention step ii) comprises a casting of the solution (S) to obtain a film of the solution (S) or a passing of the solution (S) through at least one spinneret to obtain at least one hollow fiber of the solution (S).

Therefore, in one preferred embodiment of the present invention, step ii) comprise the following steps:
ii-1) casting the solution (S) provided in step i) to obtain a film of the solution (S),
ii-2) evaporating the at least one solvent from the film of the solution (S) obtained in step ii-1) to obtain the membrane (M) which is in the form of a film.

This means that the membrane (M) is formed by evaporating the at least one solvent from a film of the solution (S).

In step ii-1) the solution (S) can be cast by any method known to the skilled person. Usually, the solution (S) is cast with a casting knife that is heated to a temperature in the range from 20 to 150°C, preferably in the range from 40 to 100°C.

The solution (S) is usually cast on a substrate that does not react with the polyarylether copolymer (P) or the at least one solvent comprised in the solution (S).

Suitable substrates are known to the skilled person and are, for example, selected from glass plates and polymer fabrics such as non-woven materials.

To obtain a dense membrane, the separation in step ii) is typically carried out by evaporation of the at least one solvent comprised in the solution (S).

Therefore, another object of the present invention is membrane (M), wherein the membrane (M) is a dense membrane or a porous membrane.

Therefore, another object of the present invention is a membrane (M), wherein the membrane (M) is asymmetric.

The present invention is further elucidated by the following working examples without limiting it.

### Components used:

| | |
|---|---|
| DCDPS: | 4,4'-dichlorodiphenyl sulfone, |
| BP: | 4,4'-dihydroxybiphenyl, |
| Isosorbide: | obtained from Roquette under the tradename POLYSORB^{®}, PA |
| K₂CO₃: | Potassium carbonate, anhydrous, average particle size 9.5 µm |
| NMP: | N-methylpyrrolidone, anhydrous |
| PEO 1 | Polyethylene oxide 1000, Mn=998 g/mol (determined by OH-group titration) |
| PEO 2 | Polyethylene oxide 2000, Mn=2010 g/mol (determined by OH-group titration) |
| PEO 3 | Polyethylene oxide 6000, Mn=5906 g/mol (determined by OH-group titration) |
| PVP: | Polyvinylpyrrolidone; (Luvitec^{®} K40) |

The viscosity number VN of the polyarylether copolymer (P) was measured according to DIN ISO 1628-1 in a 1% by weight NMP solution.

The incorporation ratio (the incorporation rate) of the sugar alcohols, like isosorbide, and further comonomers like Polyethylene oxide was determined by ¹H-NMR in CDCl₃.

The isolation of the polyarylether copolymer (P) unless otherwise indicated is carried out, by dripping an NMP solution of the polymers into demineralised water at room temperature. The drop height is 0.5 m. The throughput is about 2.5 I per hour. The beads obtained are then extracted with water (water throughput 160 I/h) at 85°C for twenty hours. The beads are then dried at a temperature below the glass transition temperature T_{g} to a residual moisture content of less than 0.2% by weight.

The color (APHA-number) of polyarylether copolymer (P) solutions was determined at a polymer concentration of 8.3 wt.% in NMP using a LICO 690-type instrument of Hach.

### Comparative example 1:

In a 4 liter glass reactor fitted with a thermometer, a gas inlet tube and a Dean-Stark-trap, 580.063 g (2.02 mol) of DCDPS, 288.43 g (1.96 mol) of Isosorbide , 39.92 g (0.04 mol) PEO 1 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 9 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Comparative example 2:

In a 4 liter glass reactor fitted with a thermometer, a gas inlet tube and a Dean-Stark-trap, 580.063 g (2.02 mol) of DCDPS, 288.43 g (1.96 mol) of Isosorbide , 39.92 g (0.04 mol) PEO 1 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 12 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 3:

In a 4 liter glass reactor fitted with a thermometer, a gas inlet tube and a Dean-Stark-trap, 580.063 g (2.02 mol) of DCDPS, 234.625 g (1.26 mol) 4,4'-Dihydroxybiphenyl, 102.298 g (0.70 mol) of Isosorbide, 39.92 g (0.04 mol) PEO 1 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 6 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 4:

In a 4 liter glass reactor fitted with a thermometer, a gas inlet tube and a Dean-Stark-trap, 580.063 g (2.02 mol) of DCDPS, 197.383 g (1.06 mol) 4,4'-Dihydroxybiphenyl, 131.526 g (0.90 mol) of Isosorbide, 39.92 g (0.04 mol) PEO 1 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 6 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 5:

In a 4 liter glass reactor fitted with a thermometer, a gas inlet tube and a Dean-Stark-trap, 580.063 g (2.02 mol) of DCDPS, 160.141 g (0.86 mol) 4,4'-Dihydroxybiphenyl, 160.754 g (1.10 mol) of Isosorbide, 39.92 g (0.04 mol) PEO 1 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 8 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Comparative Example C6:

In a 4 liter glass reactor fitted with a thermometer, a gas inlet tube and a Dean-Stark-trap, 580.063 g (2.02 mol) of DCDPS, 94.967 g (0.51 mol) 4,4'-Dihydroxybiphenyl, 211.903 g (1.45 mol) of Isosorbide, 39.92 g (0.04 mol) PEO 1 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 9 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 7:

In a 4 liter glass reactor fitted with a thermometer, a gas inlet tube and a Dean-Stark-trap, 580.063 g (2.02 mol) of DCDPS, 197.283 g (1.06 mol) 4,4'-Dihydroxybiphenyl, 131.526 g (0.90 mol) of Isosorbide, 80.04 g (0.04 mol) PEO 2 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 6 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 8:

In a 4 liter glass reactor fitted with a thermometer, a gas inlet tube and a Dean-Stark-trap, 580.063 g (2.02 mol) of DCDPS, 197.283 g (1.06 mol) 4,4'-Dihydroxybiphenyl, 131.526 g (0.90 mol) of Isosorbide, 236.24 g (0.04 mol) PEO 3 and 304.052 g (2.20 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 6 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 9:

In a 4 liter glass reactor fitted with a thermometer, a gas inlet tube and a Dean-Stark-trap, 580.063 g (2.02 mol) of DCDPS, 197.283 g (1.06 mol) 4,4'-Dihydroxybiphenyl, 131.526 g (0.90 mol) of Isosorbide, 236.24 g (0.04 mol) PEO 3 and 345.525 g (2.50 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 5 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Example 10:

In a 4 liter glass reactor fitted with a thermometer, a gas inlet tube and a Dean-Stark-trap, 580.063 g (2.02 mol) of DCDPS, 199.245 g (1.07 mol) 4,4'-Dihydroxybiphenyl, 131.526 g (0.90 mol) of Isosorbide, 177.18 g (0.03 mol) PEO 3 and 345.525 g (2.50 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 4.5 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

### Comparative Example 11:

In a 4 liter glass reactor fitted with a thermometer, a gas inlet tube and a Dean-Stark-trap, 580.063 g (2.02 mol) of DCDPS, 219.728 g (1.186 mol) 4,4'-Dihydroxybiphenyl, 102.298 g (0.70 mol) of Isosorbide, 119.76 g (0.12 mol) PEO 1 and 345.525 g (2.50 mol) of potassium carbonate with a volume average particle size of 9.5 µm were suspended in 1050 ml NMP in a nitrogen atmosphere.

The mixture was heated to 190°C within one hour. In the following, the reaction time shall be understood to be the time during which the reaction mixture was maintained at 190°C. The water that was formed in the reaction was continuously removed by distillation.

After a reaction time of 12 hours, the reaction was stopped by the addition of 1950 ml NMP and cooling down to room temperature (within one hour). The potassium chloride formed in the reaction was removed by filtration. The obtained polymer solution was then precipitated in water, the resulting polymer beads were separated and then extracted with hot water (85°C) for 20 h. Then the beads were dried at 120°C for 24 h at reduced pressure (< 100 mbar).

The viscosity numbers and the APHA color numbers are shown in table 1 below.

**Table 1**

| | C1 | C2 | 3 | 4 | 5 | C6 | 7 | 8 | 9 | 10 | C11 |
|---|---|---|---|---|---|---|---|---|---|---|---|
| DCDPS [mol] | 2.02 | 2.02 | 2.02 | 2.02 | 2.02 | 2.02 | 2.02 | 2.02 | 2.02 | 2.02 | 2.02 |
| Isosorbide [mol] | 1.96 | 1.96 | 0.70 | 0.90 | 1.10 | 1.45 | 0.90 | 0.90 | 0.90 | 0.90 | 0.70 |
| 4,4'-BP [mol] | -- | -- | 1.26 | 1.06 | 0.86 | 0.51 | 1.06 | 1.06 | 1.06 | 1.07 | 1.18 |
| PEO 1 [mol] | 0.04 | 0.04 | 0.04 | 0.04 | 0.04 | 0.04 | -- | -- | -- | -- | 0.12 |
| PEO 2 [mol] | -- | -- | -- | -- | -- | -- | 0.04 | - | -- | -- | -- |
| PEO 3 [mol] | -- | -- | -- | -- | -- | -- | -- | 0.04 | 0.04 | 0.03 | -- |
| K₂CO₃ [mol] | 2.20 | 2.20 | 2.20 | 2.20 | 2.20 | 2.20 | 2.20 | 2.20 | 2.50 | 2.50 | 2.50 |
| NMP [ml] | 1050 | 1050 | 1050 | 1050 | 1050 | 1050 | 1050 | 1050 | 1050 | 1050 | 1050 |
| Condensation t [h] | 9 | 12 | 6 | 6 | 8 | 9 | 6 | 6 | 5 | 4.5 | 12 |
| Mol% Isosorbide | 96.6 | 96.7 | 34.8 | 44.7 | 54.5 | 71.7 | 44.8 | 44.7 | 44.8 | 44.7 | 34.6 |
| Mol-% PEO | 1.91 | 1.92 | 1.96 | 1.94 | 1.93 | 1.89 | 1.95 | 1.93 | 1.95 | 1.48 | 4,7 |
| V.N. [ml/g] | 35.2 | 35.5 | 78.2 | 71.3 | 63.8 | 51.5 | 73.2 | 74.6 | 74.5 | 74.3 | 41.5 |
| APHA | >1000 | >1000 | 760 | 870 | 940 | >1000 | 640 | 450 | 390 | 430 | 970 |

| | | | | | | | | | | | |
|---|---|---|---|---|---|---|---|---|---|---|---|
| VN: Viscosity number APHA: APHA color number | | | | | | | | | | | |

The polyarylether cocopolymers (P) obtained by the inventive process show high molecular weight, as indicated by the viscosity number, and low color numbers. The condensation time is below 10 h.

The membranes were prepared as follows:
Into a three neck flask equipped with a magnetic stirrer there is added 78 ml of N-methylpyrrolidone (NMP), 5 g of polyvinylpyrrolidone (PVP, Luvitec^{®} K40) and 17 g of polyarylether copolymer (P).

The mixture is heated under gentle stirring at 60°C until a homogeneous clear viscous solution is obtained. The solution is degassed overnight at room temperature. After that the membrane solution is reheated at 60°C for 2 hours and casted onto a glass plate with a casting knife (300 microns) at 60°C using an Erichsen Coating machine operating at a speed of 5 mm/min. The membrane film is allowed to rest for 30 seconds before immersion in a water bath at 25°C for 10 minutes.

After the membrane has detached from the glass plate, the membrane is carefully transferred into a water bath for 12 h. Afterwards the membrane is transferred into a bath containing 2500 ppm NaOCl at 50°C for 4,5 h to remove PVP. After that process the membrane is washed with water at 60°C and the one time with a 0.5 wt.-% solution of sodium bisulfite to remove active chlorine. After several washing steps with water the membrane was stored wet until characterization started.

In most cases a flat sheet continuous film with micro structural characteristics of ultra filtration (UF) membranes having dimension of at least 10x15 cm size is obtained. The membrane presents a top thin skin layer (1 to 3 microns) and a porous layer underneath (thickness: 100 to 150 microns).

Membranes were produced using the polyarylether copolymers (P) obtained in comparative examples C1, example 3, comparative example C6, example 10 and c to 3 and inventive examples 7 and 10.

**Table 2**

| | M1 | M2 | M3 | M4 | M5 |
|---|---|---|---|---|---|
| C1 | 17 | | | | |
| 3 | | 17 | | | |
| C6 | | | 17 | | |
| 107 | | | | 17 | |
| C11 | | | | | 17 |
| | | | | | |
| PVP | 5 | 5 | 5 | 5 | 5 |
| NMP | 78 | 78 | 78 | 78 | 78 |
| | | | | | |
| PWP [l/m²*h*bar] | Membrane brittle | 580 | 530 | 750 | Membrane brittle |
| MWCO [kD] | - | 49 | 57 | 56 | |
| Turbidity [NTU] | 1.23 | 0.76 | 1.30 | 0.81 | 1.19 |

| | | | | | |
|---|---|---|---|---|---|
| PWP: pure water permeability MWCO: Molecular weight cut off | | | | | |

The turbidity of the solutions prepared for the membrane formation was measured using a Hach TL2360 turbidimeter operating at a wavelength of 860 ± 30 nm.

### Membrane characterization:

Using a pressure cell with a diameter of 60 mm, the pure water permeation of the membranes was tested using ultrapure water (salt-free water, filtered by a Millipore UF-system). In a subsequent test, a solution of different PEG-Standards was filtered at a pressure of 0.15 bar. By GPC-measurement of the feed and the permeate, the molecular weight cut-off was determined.

The turbidity of the dope solutions of the polyarylether copolymers (P) according to the invention is surprisingly lower compared to the solutions prepared from comparative examples.

The membranes produced with the polyarylether polymers (P) according to the invention show high permeability and good molecular weight cut off.

## Claims

1. A process for the preparation of a polyarylether copolymer (P) comprising the step of
converting a reaction mixture (R_{G}) comprising as components
(A1) at least one aromatic dihalogen component
(B1) at least one sugar alcohol selected from the group consisting of isosorbide, isomannide and isoidide,
(B2) at least one aromatic dihydroxy component,
(B3) at least one dihydroxy polyalkylene oxide,
wherein the reaction mixture (R_{G}) comprises 10 to 70 mol% of component (B1) and 29.5 to 65 mol% of component (B2) and from 0.5 to 5 mol% of component (B3), based on the total amount of components (B1), (B2) and (B3) contained in the reaction mixture (R_{G}).

2. The process according to claim 1, wherein the reaction mixture (R_{G}) moreover comprise the components
(C) at least one aprotic polar solvent and
(D) at least one carbonate component.

3. The process according claims 1 or 2, wherein the dihydroxy component (B2) comprises at least 50 % by weight of 4,4'-dihydroxybiphenyl, based on the total weight of component (B2) contained in the reaction mixture (R_{G}).

4. The process according to any one of claims 1 to 3, wherein component (A1) comprises at least 50% by weight of 4,4'-dichlorodiphenylsulfone and/or 4,4'-difluorodiphenylsulfone based on the total weight of component (A1) contained in the reaction mixture (R_{G}).

5. The process according to any one of claim 1 to 3, wherein component (A1) is selected from the group consisting of 4,4'-dichlorodiphenylsulfone and 4,4'-difluorodiphenylsulfone.

6. The process according to any one of claim 1 or 2, wherein component (A1) is selected from the group consisting of 4,4'-dichlorodiphenylketone and 4,4'-difluorodiphenylketone.

7. The process according to any one of claims 1 to 6, wherein component (C) is at least one solvent selected from the group consisting of anisole, dimethylformamide, dimethyl sulfoxide, sulfolane, N,N-dimethylacetamide, N-methyl-2-pyrrolidone and N-ethyl-2-pyrrolidone.

8. Polyarylether copolymer (P) obtained by a process according to any one of claims 1 to 7.

9. The use of a polyarylether copolymer (P) according to claim 8 in a membrane (M).

10. A membrane (M) comprising a polyarylether copolymer (P) according to claim 8.

11. The membrane (M) according to claim 10, wherein the membrane (M) is a dense membrane or a porous membrane.

12. The membrane (M) according to claim 10 or 11, wherein the membrane (M) is asymmetric.

13. A method for the preparation of a membrane (M) according to any one of claims 10 to 12, wherein the method comprises the steps
i) providing a solution (S) which comprises the polyarylether copolymer (P) and at least one solvent,
ii) separating the at least one solvent from the solution (S) to obtain the membrane (M).

14. The method according to claim 13, wherein the at least one solvent is selected from the group consisting of N-methylpyrrolidone, N-dimethylacetamide, dimethyl sulfoxide, dimethylformamide, dimethyllactamide and sulfolane.

15. The method according to claim 13 or 14, wherein the solution (S) provided in step i) comprises in the range from 0.1 to 30 wt.-% of the polyarylether polymer (P), based on the total weight of the solution (S).

## Patentansprüche

1. Verfahren zur Herstellung eines Polyarylethercopolymers (P), umfassend den Schritt des Umsetzens einer Reaktionsmischung (R_{G}), die als Komponenten Folgendes umfasst:
(A1) mindestens eine aromatische Dihalogenkomponente,
(B1) mindestens einen Zuckeralkohol, der aus der Gruppe bestehend aus Isosorbid, Isomannid und Isoidid ausgewählt ist,
(B2) mindestens eine aromatische Dihydroxykomponente,
(B3) mindestens ein Dihydroxypolyalkylenoxid,
wobei die Reaktionsmischung (R_{G}) 10 bis 70 Mol-% Komponente (B1) und 29,5 bis 65 Mol-% Komponente (B2) und 0,5 bis 5 Mol-% Komponente (B3), bezogen auf die Gesamtmenge der in der Reaktionsmischung (R_{G}) enthaltenen Komponenten (B1), (B2) und (B3), umfasst.

2. Verfahren nach Anspruch 1, wobei die Reaktionsmischung (R_{G}) weiterhin die folgenden Komponenten umfasst:
(C) mindestens ein aprotisches polares Lösungsmittel und
(D) mindestens eine Carbonatkomponente.

3. Verfahren nach Anspruch 1 oder 2, wobei die Dihydroxykomponente (B2) mindestens 50 Gew.-% 4,4'-Dihydroxybiphenyl, bezogen auf das Gesamtgewicht der in der Reaktionsmischung (R_{G}) enthaltenen Komponente (B2), umfasst.

4. Verfahren nach einem der Ansprüche 1 bis 3, wobei Komponente (A1) mindestens 50 Gew.-% 4,4'-Dichlordiphenylsulfon und/oder 4,4'-Difluordiphenylsulfon, bezogen auf das Gesamtgewicht der in der Reaktionsmischung (R_{G}) enthaltenen Komponente (A1), umfasst.

5. Verfahren nach einem der Ansprüche 1 bis 3, wobei Komponente (A1) aus der Gruppe bestehend aus 4,4'-Dichlordiphenylsulfon und 4,4'-Difluordiphenylsulfon ausgewählt ist.

6. Verfahren nach Anspruch 1 oder 2, wobei Komponente (A1) aus der Gruppe bestehend aus 4,4'-Dichlordiphenylketon und 4,4'-Difluordiphenylketon ausgewählt ist.

7. Verfahren nach einem der Ansprüche 1 bis 6, wobei es sich bei Komponente (C) um mindestens ein Lösungsmittel, das aus der Gruppe bestehend aus Anisol, Dimethylformamid, Dimethylsulfoxid, Sulfolan, N,N-Dimethylacetamid, N-Methyl-2-pyrrolidon und N-Ethyl-2-pyrrolidon ausgewählt ist, handelt.

8. Polyarylethercopolymer (P), erhalten durch ein Verfahren nach einem der Ansprüche 1 bis 7.

9. Verwendung eines Polyarylethercopolymers (P) nach Anspruch 8 in einer Membran (M).

10. Membran (M), umfassend ein Polyarylethercopolymer (P) nach Anspruch 8.

11. Membran (M) nach Anspruch 10, wobei es sich bei der Membran (M) um eine dichte Membran oder eine poröse Membran handelt.

12. Membran (M) nach Anspruch 10 oder 11, wobei die Membran (M) unsymmetrisch ist.

13. Verfahren zur Herstellung einer Membran (M) nach einem der Ansprüche 10 bis 12, wobei das Verfahren die folgenden Schritte umfasst:
i) Bereitstellen einer Lösung (S), die das Polyarylethercopolymer (P) und mindestens ein Lösungsmittel umfasst,
ii) Abtrennen des mindestens einen Lösungsmittels von der Lösung (S) zum Erhalt der Membran (M).

14. Verfahren nach Anspruch 13, wobei das mindestens eine Lösungsmittel aus der Gruppe bestehend aus N-Methylpyrrolidon, N-Dimethylacetamid, Dimethylsulfoxid, Dimethylformamid, Dimethyllactamid und Sulfolan ausgewählt wird.

15. Verfahren nach Anspruch 13 oder 14, wobei die in Schritt i) bereitgestellte Lösung (S) im Bereich von 0,1 bis 30 Gew.-% des Polyaryletherpolymers (P), bezogen auf das Gesamtgewicht der Lösung (S), umfasst.

## Revendications

1. Procédé pour la préparation d'un copolymère de polyaryléther (P) comprenant l'étape de
conversion d'un mélange réactionnel (R_{G}) comprenant comme composants
(A1) au moins un composant dihalogène aromatique
(B1) au moins un alcool de sucre choisi dans le groupe constitué par l'isosorbide, l'isomannide et l'isoidide, (B2) au moins un composant dihydroxy aromatique,
(B3) au moins un dihydroxy poly(oxyde d'alkylène),
dans lequel le mélange réactionnel (R_{G}) comprend 10 à 70 % en moles du composant (B1) et 29,5 à 65 % en moles du composant (B2) et 0,5 à 5 % en moles du composant (B3), par rapport à la quantité totale des composants (B1), (B2) et (B3) contenus dans le mélange réactionnel (R_{G}).

2. Procédé selon la revendication 1, dans lequel le mélange réactionnel (R_{G}) comprend en outre les composants (C) au moins un solvant polaire aprotique et (D) au moins un composant carbonate.

3. Procédé selon la revendication 1 ou 2, dans lequel le composant dihydroxy (B2) comprend au moins 50 % en poids de 4,4'-dihydroxybiphényle, par rapport au poids total du composant (B2) contenu dans le mélange réactionnel (R_{G}).

4. Procédé selon l'une quelconque des revendications 1 à 3, dans lequel le composant (A1) comprend au moins 50 % en poids de 4,4'-dichlorodiphénylsulfone et/ou 4,4'-difluorodiphénylsulfone par rapport au poids total du composant (A1) contenu dans le mélange réactionnel (R_{G}).

5. Procédé selon l'une quelconque des revendications 1 à 3, dans lequel le composant (A1) est choisi dans le groupe constitué par la 4,4'-dichlorodiphénylsulfone et la 4,4'-difluorodiphénylsulfone.

6. Procédé selon l'une quelconque des revendications 1 ou 2, dans lequel le composant (A1) est choisi dans le groupe constitué par la 4,4'-dichlorodiphénylcétone et la 4,4'-difluorodiphénylcétone.

7. Procédé selon l'une quelconque des revendications 1 à 6, dans lequel le composant (C) est au moins un solvant choisi dans le groupe constitué par l'anisole, le diméthylformamide, le diméthylsulfoxyde, le sulfolane, le N,N-diméthylacétamide, la N-méthyl-2-pyrrolidone et la N-éthyl-2-pyrrolidone.

8. Copolymère de polyaryléther (P) obtenu par un procédé selon l'une quelconque des revendications 1 à 7.

9. Utilisation d'un copolymère de polyaryléther (P) selon la revendication 8 dans une membrane (M).

10. Membrane (M) comprenant un copolymère de polyaryléther (P) selon la revendication 8.

11. Membrane (M) selon la revendication 10, dans laquelle la membrane (M) est une membrane dense ou une membrane poreuse.

12. Membrane (M) selon la revendication 10 ou 11, dans laquelle la membrane (M) est asymétrique.

13. Procédé pour la préparation d'une membrane (M) selon l'une quelconque des revendications 10 à 12, dans lequel le procédé comprend les étapes de
i) fourniture d'une solution (S) qui comprend le copolymère de polyaryléther (P) et au moins un solvant,
ii) séparation de l'au moins un solvant de la solution (S) pour obtenir la membrane (M).

14. Procédé selon la revendication 13, dans lequel l'au moins un solvant est choisi dans le groupe constitué par la N-méthylpyrrolidone, le N-diméthylacétamide, le diméthylsulfoxyde, le diméthylformamide, le diméthyllactamide et le sulfolane.

15. Procédé selon la revendication 13 ou 14, dans lequel la solution (S) fournie dans l'étape i) comprend dans la plage de 0,1 à 30 % en poids du polymère de polyaryléther (P), sur la base du poids total de la solution (S).
